# EUROPÄISCHE PATENTSCHRIFT

(11) **EP 0 566 006 B1**
(45) Veröffentlichungstag und Bekanntmachung des Hinweises auf die Patenterteilung: **07.02.1996**
(21) Anmeldenummer: 93105707.9
(22) Anmeldetag: 06.04.1993
(51) Int. Cl.: F16D 65/56

(54) **Belagverschleissdetektor für eine druckluftbetätigte Scheibenbremse**
Lining wear detector for an air operated disc brake
Détecteur d'usure d'une garniture d'un frein à disque actionné par air comprimé

(30) Priorität: 13.04.1992 DE 4212387
(43) Veröffentlichungstag der Anmeldung: 20.10.1993
(73) Patentinhaber: KNORR-BREMSE SYSTEME FÜR NUTZFAHRZEUGE GmbH, D-80809 München (DE)
(72) Erfinder: Hirschler, Klaus, W-8068 Pfaffenhofen/Ilm (DE); Iraschko, Johann, W-8069 Schweitenkirchen (DE); Schullerus, Otto, W-8000 München 40 (DE)
(74) Vertreter: KUHNEN, WACKER & PARTNER

(56) Entgegenhaltungen:
- EP-A- 0 460 378
- DE-A- 3 716 202
- DE-A- 4 034 165
- DE-A- 4 041 318

## Beschreibung

Die Erfindung bezieht sich auf einen Belagverschleißdetektor, der für eine druckluftbetätigte Scheibenbremse gemäß dem Oberbegriff des Anspruchs 1 vorgesehen ist.

Gattungsgemäße druckluftbetätigte bzw. pneumatische Scheibenbremsen, für die der erfindungsgemäße Belagverschleißdetektor vorgesehen ist, sind beispielsweise aus der DE-OS 37 16 202 sowie aus der nicht vorveröffentlichten DE-OS 40 32 885 bekannt. Bei diesen bekannten Scheibenbremsen, deren hauptsächlicher Einsatzbereich bei Nutzfahrzeugen liegt, wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen die Bremsscheibe gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Um das Lüftspiel, d.h. den Abstand der Bremsbacken zur Bremsscheibe im unbetätigten Zustand unter Ausgleich der sich durch Abrieb ändernden Belagstärke konstant zu halten, ist eine Nachstelleinrichtung vorgesehen, die mit jeder Stellspindel drehfest gekoppelt ist und bei jeder Betätigung des Drehhebels jede Stellspindel dann um einen bestimmten Winkel dreht, wenn die Bremsbacke nach Überwindung des Soll-Lüftspiels noch nicht an der Bremsscheibe anliegt. Jede Stellspindel wird folglich von der Nachstelleinrichtung mit zunehmendem Belagverschleiß weiter zur Bremsscheibe hin verschraubt. Zu näheren Einzelheiten des Aufbaus einer derartigen Nachstelleinrichtung wird im übrigen auf DE-OS 40 34 165 verwiesen und vollinhaltlich bezug genommen.

Um den Fahrer jederzeit über die restliche Belagstärke in Kenntnis zu setzen, so daß ein ggf. erforderlich werdender Belagwechsel nicht übersehen werden kann, wurde bereits vorgeschlagen, Belagverschleißdetektoren vorzusehen, die mit einer entsprechenden Anzeigeeinrichtung im Fahrerhaus gekoppelt sind. Für druckluftbetätigte Scheibenbremsen bislang verwendete Belagverschleißdetektoren sind aus Sensorelementen gebildet, die im Bremsbelag in der Weise eingebaut sind, daß mit zunehmendem Abrieb des Bremsbelags Kontakte der Sensorelemente freigelegt werden, die einen entsprechenden Stromfluß hervorrufen, der geeignet ausgewertet werden kann. Ein Nachteil derartiger integrierter Sensorelemente liegt jedoch darin, daß sie im Bereich größter Hitzeentwicklung der Scheibenbremse angeordnet sind, wodurch die Zuverlässigkeit durch Kontakterosion beeinträchtigt werden kann. Darüber hinaus ist die erzielbare Meßgenauigkeit stark vom jeweiligen Einbauort im Bremsbelag abhängig; schließlich werden auch die Herstellungskosten des Bremsbelags durch derartige Sensoren deutlich erhöht.

In der nicht vorveröffentlichten DE-OS 40 41 318 wird zur Vermeidung der vorstehend erläuterten Probleme von im Bremsbelag integrierten Kontaktsensoren vorgeschlagen, mittels der Nachstelleinrichtung einen Drehwinkelgeber zu betätigen, dessen Ausgangssignal als Verschleißmaß ausgewertet wird. Diese Art der Verschleißerfassung basiert auf der Überlegung, daß die Drehbewegung der Nachstelleinrichtung, die unmittelbar auf die Spindel(n) übertragen wird, proportional zur Nachstellbewegung der Spindel(n) und damit zum Verschleißmaß des von der Zuspanneinrichtung betätigten Bremsbelags ist. Da der gegenüberliegende, vom Bremssattel gegen die Bremsscheibe gedrückte Bremsbelag im wesentlichen das gleiche Verschleißverhalten zeigt, kann anhand des Ausgangsignals des Drehwinkelgebers somit der momentane Gesamt-Verschleiß der Bremsbeläge bzw. die restliche Belagstärke errechnet werden.

Obgleich sich der aus der DE-OS 40 41 318 bekannte Verschleißdetektor gegenüber den im Bremsbelag integrierten Kontaktsensoren durch wesentlich höhere Genauigkeit sowie Zuverlässigkeit auszeichnet und darüber hinaus die Herstellungskosten der Bremsbeläge verringern hilft, liegt ein gewisser Nachteil darin, daß das Ausgangssignal des Drehwinkelsensors nicht unmittelbar für eine Anzeige verwendet werden kann: Die Nachsteinrichtung dreht die Stellspindel(n) während des gesamten Nachstellzyklus' nämlich mehrere Male, so daß sich der Verlauf des Ausgangssignals des Drehwinkelgebers entsprechend oft wiederholt, d.h. das Ausgangssignal ist mehrdeutig. Die Anzeigeeinrichtung muß daher über eine entsprechende Auswertungselektronik angeschlossen werden, die beispielsweise bei Beginn jeder neuen Umdrehung einen Zähler geeignet aufstuft. Eine derartige Auswertungselektronik ist jedoch vergleichsweise teuer und auch insofern nachteilig, als bei jedem Belagwechsel ein Rückstellen des Zählers erfolgen muß, um die Anzeige zu aktualisieren; andernfalls wird fortan nicht mehr die korrekte Belagstärke angezeigt.

Aus der EP 0 460 378 A2 ist ein Belagverschleißdetektor für eine S-Nocken-Trommelbremse bekannt, bei der die Zuspannkraft unmittelbar, d.h. ohne Zwischenschaltung eines Kraftverstärkungsmechanismus' auf einen Hebel aufgebracht wird, der eine S-Nocken-Welle betätigt; eine derartige Zuspannvorrichtung scheidet daher für den Einsatz bei gattungsgemäßen druckluftbetätigten bzw. pneumatischen Scheibenbremsen aus. Die Nachstelleinrichtung dieser bekannten Trommelbremse ist durch eine drehbar gelagerte Welle gebildet, die einen mit einer Umfangsschnecke versehenen Bereich aufweist, wobei die Umfangsschnecke mit einem Zahnrad in Eingriff steht und bei Auftreten von Belagverschleiß um einen bestimmten Betrag gedreht wird; hierdurch wird die Welle in Nachstellrichtung in der Weise verschoben, daß sich der Drehpunkt des Bremshebels um ein entsprechendes Stück verlagert.

Infolge der o.g. Arbeitsweise der Nachstelleinrichtung dieser bekannten Trommelbremse kann die Nachstell-Bewegungsstrecke der Welle unmittelbar als Maß für den Belagverschleiß herangezogen werden. Demzufolge ist als Belagverschleißdetektor ein Wegsensor vorgesehen, der den von der Welle jeweils zurückgelegten Weg erfaßt; da die Welle einen vergleichsweise langen Lagerungsbereich aufweist, kann bei Plazierung des Wegsensors innerhalb des Lagerungsbereichs die Wegstrecke auf relativ einfache Art und Weise erfaßt werden, so daß der Belagverschleißdetektor mit wenig Aufwand realisiert werden kann. Darüber hinaus ist das von dem Wegsensor gelieferte Signal eindeutig und bedarf folglich keiner Nachbehandlung durch eine Elektronik.

Das aus der EP 0 460 378 A2 bekannte Prinzip der Belagverschleißerfassung kann jedoch bei einer gattungsgemäßen Zuspannvorrichtung insofern nicht angewandt werden, als die Nachstelleinrichtung dort lediglich eine Drehbewegung durchführt, ihre Axiallage hingegen nicht verändert. Es könnte daher daran gedacht werden, die von einer der Stellspindeln zurückgelegte Nachstell-Wegstrecke als Maß für den momentanen Verschleiß heranzuziehen; ein entsprechender Wegsensor wäre jedoch aufgrund der Gewindeoberfläche der Stellspindel nur mit großem Aufwand realisierbar und würde darüber hinaus auch Probleme hinsichtlich Einbaumöglichkeiten und Wartbarkeit hervorrufen.

Der Erfindung liegt die Aufgabe zugrunde, einen für eine druckluftbetätigte Scheibenbremse gemäß dem Oberbegriff des Anspruchs 1 vorgesehenen Belagverschleißdetektor zu schaffen, der sich durch geringe Herstellungskosten auszeichnet und ein eindeutig auswertbares Meßsignal liefert.

Diese Aufgabe wird erfindungsgemäß mit den im Kennzeichnungsteil des Anspruchs 1 angegebenen Maßnahmen gelöst.

Erfindungsgemäß ist die Nachstelleinrichtung demzufolge mit einem Untersetzungsgetriebe gekoppelt, das die von der Nachstelleinrichtung während des gesamten Nachstellzyklus' insgesamt durchgeführten Umdrehungen auf höchstens eine Umdrehung reduziert, wobei der Abtrieb des Untersetzungsgetriebes einen Drehwinkelsensor betätigt. Hierdurch wird erreicht, daß der Drehwinkelsensor ein eindeutiges, d.h. sich nicht zyklisch wiederholendes Erfassungssignal erzeugt, das entsprechend leicht bzw. ohne Zwischenschaltung einer Auswertungselektronik ausgewertet werden kann. Da ein geeignetes Untersetzungsgetriebe zudem vergleichsweise billig ist und auch die Montage mitsamt dem Drehwinkwlgeber keine wesentlichen Probleme bereitet, zeichnet sich der erfindungsgemäße Belagverschleißdetektor auch durch sehr geringe Herstellungskosten aus, die im Vergleich zu den Gesamtkosten der Zuspannvorrichtung kaum ins Gewicht fallen.

Ein besonders einfacher und kostengünstiger Einbau des Belagverschleißdetektors ist gemäß Anspruch 2 dann gewährleistet, wenn die Nachstelleinrichtung unmittelbar mit ihrem bremsscheibenabgewandten Ende mit dem Untersetzungsgetriebe gekoppelt ist. Gleichwohl ist es auch möglich, das Untersetzungsgetriebe an anderer Stelle oder, bei einer zweispindeligen Zuspannvorrichtung, an der synchronisierten Betätigungswelle der zweiten Spindel vorzusehen.

Gemäß Anspruch 3 ist vorzugsweise vorgesehen, daß der Drehwinkelsensor ein Drehpotentiometer aufweist; ein derartiges Drehpotentiometer zeichnet sich nicht nur durch geringe Kosten aus, sondern hat darüber hinaus den Vorteil, daß das erzeugte Signal unmittelbar zur Anzeige gebracht werden kann. So ist es beispielsweise möglich, bei geeigneter Dimensionierung des Widerstandswerts des Drehpotentiometers dieses mittels eines Umschalters auf ein bereits vorhandenes Analog-Anzeigeinstrument, wie z.B. die Tankuhr, aufzuschalten, so daß der Fahrer durch einfaches Betätigen dieses Schalters eine Belagverschleißanzeige erhält. Da somit ein separates Anzeigeinstrument überflüssig ist, wird hierdurch eine äußerst preiswerte Belagverschleißanzeige realisiert. Bei Verwendung eines derartigen Drehpotentiometers wird der Untersetzungsfaktor des Untersetzungsgetriebes zweckmäßig so gewählt, daß die von der Nachstelleinrichtung durchgeführten Umdrehungen auf einen Drehwinkel reduziert werden, der im wesentlichen dem vollständigen Betätigungswinkel des Drehpotentiometers entspricht; dieser beträgt bei gängigen Potentiometern ca. 300 Grad. Gemäß Anspruch 4 wird der Abtrieb des Untersetzungsgetriebes vorzugsweise mit dem Schleifer des Drehpotentiometers gekoppelt, während seine Widerstandsschicht stationär gelagert wird.

Anstelle mittels eines Drehpotentiometers kann der Drehwinkelsensor gemäß Anspruch 5 auch durch einen optischen oder magnetischen Drehwinkelgeber realisiert werden, wobei in diesem Fall das Untersetzungsgetriebe auf einen Gesamtwinkel von etwas weniger als 360 Grad reduzieren sollte, um zwischen dem Minimal- und Maximalwert des Gebers deutlich unterscheiden zu können. Gemäß Anspruch 6 kann ein derartiger Drehwinkelgeber auf einfache Weise in die Praxis umgesetzt werden, indem z.B. der Abtrieb des Untersetzungsgetriebes eine optische Codierscheibe oder eine mit Magneten versehene Umfangsfläche dreht, die auf mindestens ein ortsfestes Sensorelement einwirkt.

Die Stellspindeln der gattungsgemäßen Scheibenbremsen sind während des Zuspannvorgangs durch die nicht spielfreie Lagerung insbesondere der Traverse gewissen Schwenkbewegungen in der Bremsscheibenebene unterworfen. Diese Schwenkbewegungen übertragen sich zum Teil auch auf die drehfest gekoppelte Nachstelleinrichtung; infolgedessen wird das Untersetzungsgetriebe gemäß der im Anspruch 7 angegebenen Weiterbildung der Erfindung vorzugsweise in einer Lagerungsvorrichtung gelagert, die das Untersetzungsgetriebe zwar drehfest, jedoch unter Aufrechterhaltung einer Längs- und Querverschiebbarkeit trägt. Hierdurch wird erreicht, daß die genannten Schwenkbewegungen keinen Einfluß auf die Genauigkeit des Erfassungssignals haben; insbesondere wird verhindert, daß dem Erfassungssignal beim Zuspannen ein Rauschsignal überlagert wird, das ggf. zu einer fehlerhaften Anzeige führen könnte. Eine derartige Lagerungsvorrichtung wird gemäß Anspruch 8 vorteilhaft dadurch gebildet, daß ein längsverschiebbar gelagerter Längsschlitten vorgesehen wird, in dessen Mitte ein Querschlitten querverschiebbar gelagert wird, der das Untersetzungsgetriebe trägt. Vorzugsweise wird die auf diese Weise gebildete Lagerungsvorrichtung an einer Gehäuseabdeckung befestigt, die gleichzeitig zum Schutz des Detektors dient. Die Merkmale des Anspruchs 8 sind insofern auch ohne die vorstehend erläuterten kennzeichnenden Merkmale der Erfindung von Bedeutung und schutzbegründend, als eine derartige Lagerung für einen Drehwinkelgeber bislang nicht bekannt geworden ist.

Gemäß Anspruch 10 ist es weiterhin von Vorteil, wenn der Drehwinkelsensor zusammen mit dem Untersetzungsgetriebe als eine integrale Baueinheit ausgebildet wird.

Ein sehr kompakter Aufbau des erfindungsgemäßen Detektors läßt sich gemäß Anspruch 11 dann erzielen, wenn für das Untersetzungsgetriebe ein Zykloidengetriebe verwendet wird.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung einer druckluftbetätigten (pneumatischen) Scheibenbremse;
**Fig. 2** einen Längsschnitt der in Fig. 1 gezeigten Zuspannvorrichtung;
**Fig. 3** ein vergrößertes Detail der Fig.2 zur Erläuterung des grundsätzlichen Aufbaus und der Funktionsweise des Belagverschleißdetektors;
**Fig. 4** eine Querschnittsansicht eines Zykloiden-Untersetzungsgetriebes samt eines von diesem betätigten Drehpotentiometers;
**Fig. 5A und 5B** zwei Längsschnitte durch das Zykloiden-Untersetzungsgetriebe; und
**Fig. 6** eine Draufsicht auf die Lagerungsvorrichtung des Zykloiden-Untersetzungsgetriebes.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist.

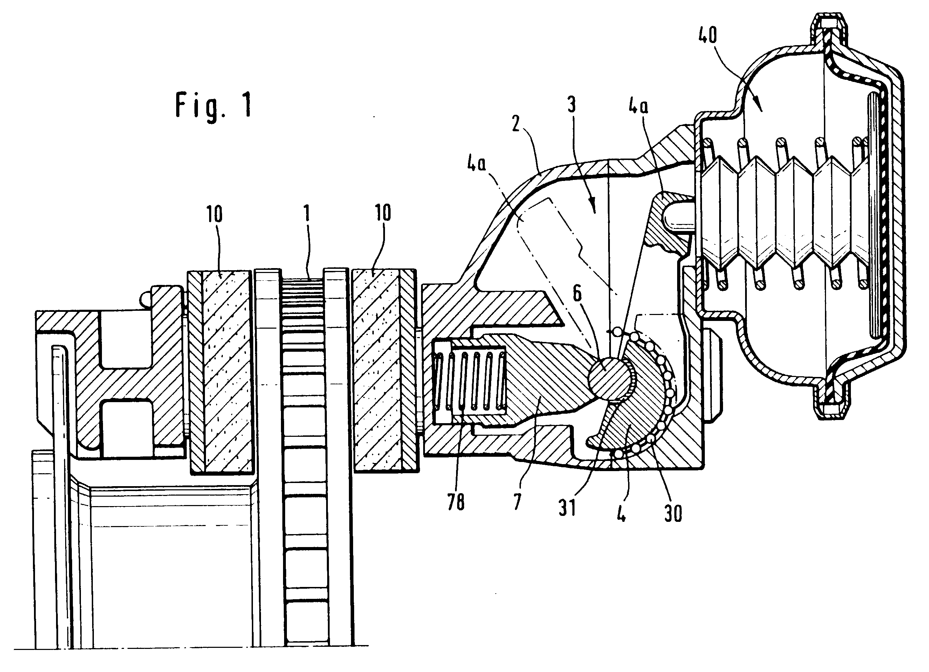

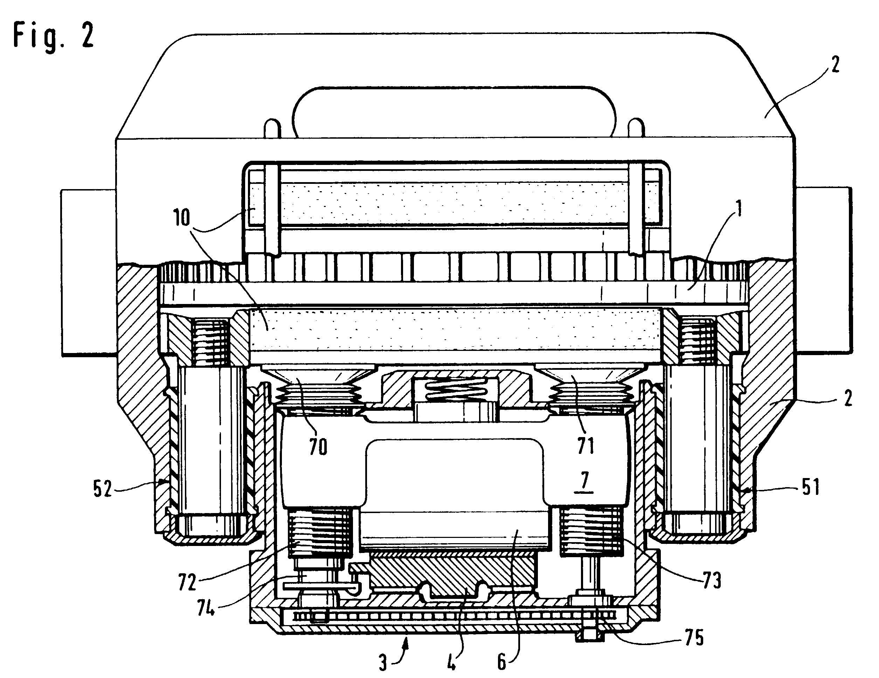

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt, welcher gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert ist. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

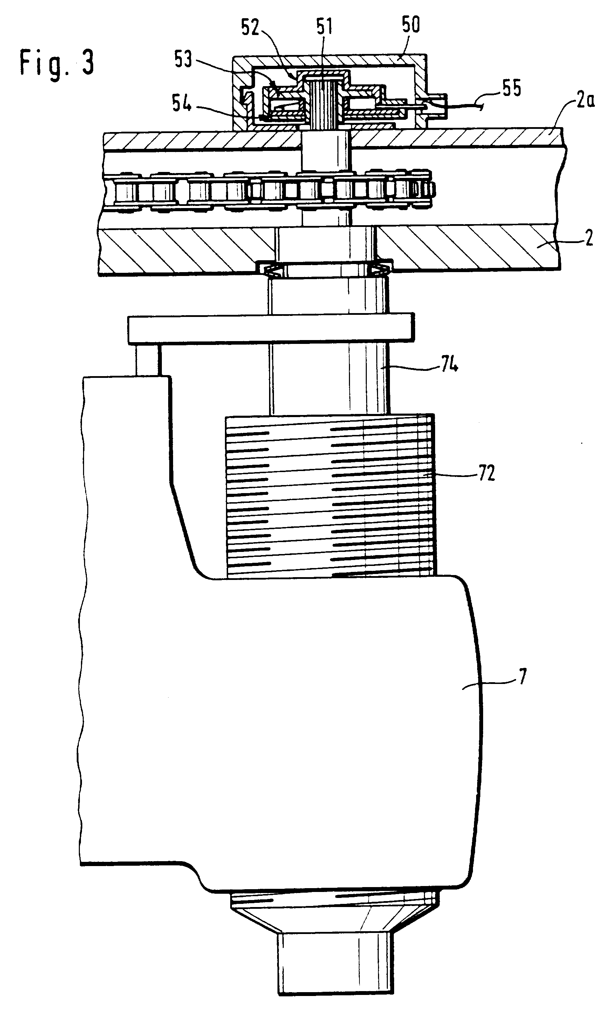

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an.

Im Inneren der Stellspindel 72 ist eine Nachstelleinrichtung 74 angeordnet, die über eine Axialverzahnung drehfest mit der Stellspindel 72 gekoppelt ist, so daß die axiale Verschiebbarkeit der Stellspindel 72 gewährleistet ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Der augenblickliche Betrag des Belagverschleißes wird erfindungsgemäß mittels eines Belagverschleißdetektors erfaßt, dessen genauer Aufbau in Fig.3 gezeigt ist. Es sei an dieser Stelle darauf hingewiesen, daß der Belagverschleißdetektor, wie in Fig.3 angedeutet, vorzugsweise am bremsscheibenabgewandten Ende der Nachstelleinrichtung 74 vorgesehen ist; jedoch ist es prinzipiell auch möglich, den Belagverschleißdetektor an anderer Stelle vorzusehen, wie beispielsweise am bremsscheibenabgewandten Ende der die zweite Stellspindel 73 mit der Nachstelleinrichtung 74 koppelnden Welle (deren Ende wird jedoch bevorzugt mit einem Sechskant-Drehkopf zum Rückstellen der Spindeln versehen, so daß das Ende der Nachstelleinrichtung für die Ankopplung des Belagverschleißdetektors geeigneter erscheint). In jedem Fall ist dafür Sorge zu tragen, daß der erfindungsgemäße Belagverschleißdetektor so angekoppelt wird, daß er eine zur Drehung der Nachstelleinrichtung snychrone Drehbewegung erfaßt.

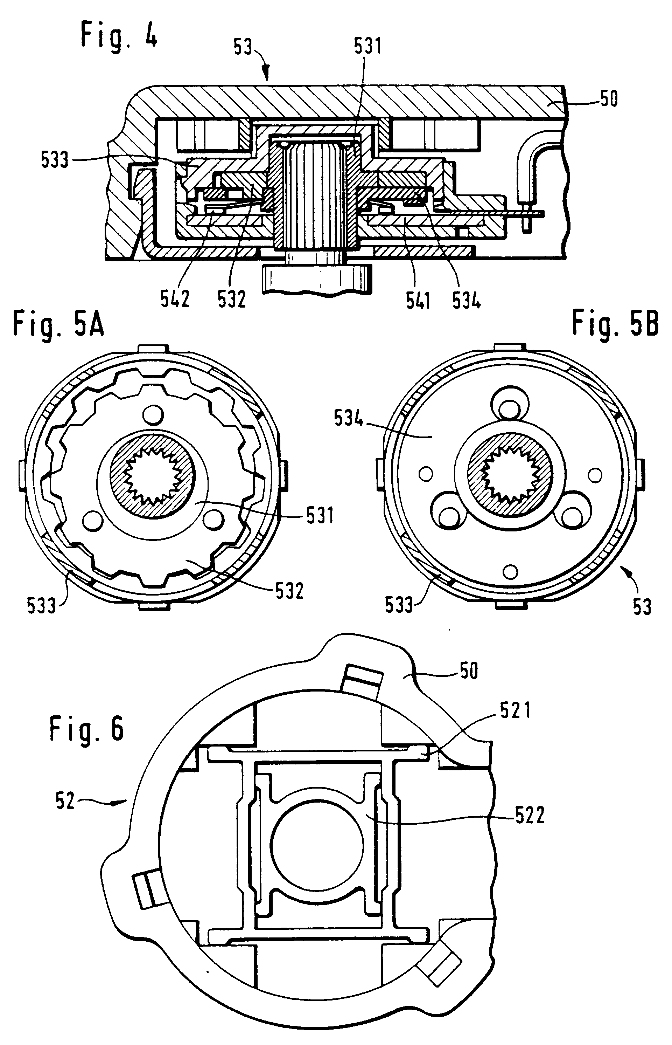

Wie aus den Fig.3 und 4 hervorgeht, greift das bremsscheibenabgewandte Ende der Nachstelleinrichtung 74 mittels eines Ritzels 51 in eine entsprechende axiale Innenverzahnung eines Untersetzungsgetriebes 53 derart ein, daß dieses bei jeder Drehbewegung der Nachstelleinrichtung 74 angetrieben wird. Mit dem Abtrieb des Untersetzungsgetriebes 53 ist ein Drehwinkelsensor in Form eines Drehpotentiometers 54 in der Weise gekoppelt, daß ein Schleifer 542 (siehe Fig.4) des Drehpotentiometers 54 um einen um den Untersetzungsfaktor des Getriebes 53 verringerten Drehwinkel gedreht wird. Die Kopplung von Untersetzungsgetriebe 53 und Drehpotentiometer 54 ist dabei so justiert, daß der Schleifer 542 in der obersten Stellung der Drehspindel 74 ("volle Belagstärke") die eine Endposition einer Widerstandsbahn 541 berührt, so daß das Drehpotentiometer 54 beispielsweise den niedrigsten Widerstandswert aufweist; andererseits ist das Untersetzungsverhältnis des Getriebes 53 so gewählt, daß der Schleifer 542 in der untersten Stellung der Drehspindel 74 ("Bremsbelag vollständig aufgebraucht") die andere Endposition der Widerstandsbahn 541 berührt, so daß das Drehpotentiometer 54 seinen höchsten Widerstandswert aufweist. Selbstverständlich ist es auch möglich, das Verhältnis der Widerstandswerte umgekehrt zu wählen, was jedoch in gleicher Weise durch Vertauschen der über eine lediglich schematisch gezeigte Leitung 55 nach außen geführten Anschlüsse des Drehpotentiometers 54 erzielbar ist.

Wie insbesondere aus den Fig.5A und 5B zu erkennen ist, ist das Untersetzungsgetriebe 53 als Zykloidengetriebe ausgebildet, bei dem die mit dem Ritzel 51 der Nachstelleinrichtung 74 gekoppelte Antriebswelle auf einen Exzenter 531 einwirkt, der ein mit einer Außenverzahnung versehenes Getriebe-Innenrad 532 in der Weise in einer exzentrischen Umlaufbahn dreht, daß lediglich ein Teil seiner Zähne in Eingriff mit einem Getriebe-Außenrad 533 steht, das eine entsprechende Innenverzahnung aufweist und gleichzeitig als Gehäuse des Getriebes 53 dient. Gemäß Fig.5B wirkt das Getriebe-Innenrad 532 über drei Stifte auf drei zugeordnete, etwa den doppelten Durchmesser aufweisende Bohrungen einer Abtriebsscheibe 534 ein; diese ist mit dem Schleifer 542 des Drehpotentiometers 54 gekoppelt. Im übrigen ist der Aufbau eines derartigen Zykloidengetriebes bekannt, so daß auf eine nähere Erläuterung seiner Funktionsweise verzichtet wird. Es sei jedoch angemerkt, daß jedes andere Getriebe verwendet werden kann, das trotz eines hohen Untersetzungsfaktors eine kompakte Bauform aufweist, wie etwa ein Planetenradgetriebe.

Um zu verhindern, daß während des Zuspannvorgangs auftretende Schwenkbewegungen der Nachstelleinrichtung 74 zu einer Verfälschung des Ausgangssignals des Drehpotentiometers 54 führen, ist das Untersetzungsgetriebe 53 in einer in Fig.6 näher gezeigten Lagerungsvorrichtung 52 gelagert, die das Untersetzungsgetriebe 53 zwar drehfest, jedoch unter Aufrechterhaltung einer Längs- und Querverschiebbarkeit trägt. Die Lagerungsvorrichtung 52 besteht erfindungsgemäß aus einem längsverschiebbar gelagerten Längsschlitten 521, in dessen Mitte ein Querschlitten 522 querverschiebbar gelagert wird, der seinerseits das Untersetzungsgetriebe 53 trägt. Die auf diese Weise gebildete Lagerungsvorrichtung ist an einer Gehäuseabdeckung 50 befestigt, die gleichzeitig zum Schutz des Belagverschleißdetektors dient. Wie aus Fig.6 hervorgeht, stützt sich der Längsschlitten 521 an entsprechenden, nach innen gerichteten Vorsprüngen der Gehäuseabdeckung 50 ab. Für den erfindungsgemäßen Aufbau der Lagerungsvorrichtung 52 wird im übrigen selbständiger Schutz beansprucht.

Obgleich die Lagerungsvorrichtung 52, wie aus den Fig.3 und 4 zu erkennen ist, an der Gehäuseabdeckung 50 befestigt ist, so daß das Drehpotentiometer 54 unterhalb des Untersetzungsgetriebes 53 angeordnet ist, ist es gleichwohl auch möglich, eine umgekehrte Anordnung vorzusehen, falls dies von Vorteil ist. In jedem Fall wird das Untersetzungsgetriebe 53 zusammen mit dem Drehpotentiometer 54 vorzugsweise als eine integrierte Baueinheit ausgeführt, die eine entsprechend einfache Montage und Lagerhaltung gewährleistet.

Das Drehpotentiometer 54 wird über die Leitung 55 mit einer nicht näher gezeigten Anzeigeeinrichtung im Führerhaus des Nutzfahrzeugs verbunden, so daß der Fahrer, ggf. unter Zwischenschaltung einer Auswertungs- oder Treiberelektronik, genaue Informationen über den jeweiligen Wert der Bremsbelagstärke erhält. Falls eine Auswertungselektronik verwendet wird, ist es möglich, aus dem Ausgangssignal des Drehpotentiometers 54 weitere Informationen abzuleiten, wie insbesondere den Wert des Lüftspiels oder eine eventuelle Überhitzung der Scheibenbremse. Zum Anschluß des Drehpotentiomters 54 kann im einfachsten Fall eine einzige Signalleitung verwendet werden, wobei der andere Kontakt des Potentiometers 54 mit der Fahrzeugmasse verbunden ist, so daß das erzeugte Signal den Widerstandswert gegenüber der Fahrzeugmasse darstellt. Selbstverständlich ist es auch möglich, beide Endkontakte oder zusätzlich auch den Mittelabgriff des Potentiometers 54 über eine Zweifach- bzw. Dreifachleitung der Anzeigeeinrichtung zuzuführen, falls dies für die Signalauswertung von Vorteil ist.

Anstelle eines Drehpotentiometers kann auch eine andere Art von Drehwinkelsensor verwendet werden, wie z.B. ein optischer oder magnetischer Drehwinkelgeber, wobei der Untersetzungsfaktor des Untersetzungsgetriebes hierbei so gewählt werden sollte, daß die von der Nachstelleinrichtung 74 während des gesamten Nachstellzyklus' insgesamt durchgeführten Umdrehungen auf etwas weniger als eine 360-Grad-Umdrehung reduziert werden, um ein eindeutiges Signal zu erhalten. Bei Verwendung eines derartigen Gebers kann der Abtrieb des Untersetzungsgetriebes 53 mit einer optischen Codierscheibe bzw. einer mit Magneten versehenen Umfangsfläche gekoppelt sein, die auf mindestens ein ortsfestes Sensorelement (Leuchtdiode bzw. Hall-Element) einwirkt. Jedoch ist sowohl der Aufbau eines derartigen Drehwinkelsensors als auch die Signalauswertung wesentlich aufwendiger als bei dem vorbeschriebenen Drehpotentiometer, so daß dieses in der Praxis vorzuziehen ist.

Bei der erläuterten Ausführungsform der Zuspannvorrichtung 3 erfolgt die Kraftübersetzung mittels eines drehbar gelagerten Hebels 4, der über einen Exzenter auf eine Traverse 7 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; das erfindungsgemäße Untersetzungsgetriebe kann vielmehr bei allen Stellelementen verwendet werden, deren axiale Relativlage zur Bremsscheibe mit zunehmendem Belagverschleiß von einer geeigneten Antriebseinrichtung verändert wird.

## Patentansprüche

1. Belagverschleißdetektor für eine druckluftbetätigte Scheibenbremse, die einen eine Bremsscheibe *(1)* umfassenden Bremssattel *(2)* aufweist, auf dessen einer Seite eine Zuspannvorrichtung *(3)* angeordnet ist, die über mindestens eine Stellspindel *(72, 73)* und ein an derem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirkt, wobei eine mit der Stellspindel *(72, 73)* drehfest gekoppelte Nachstelleinrichtung *(74)* das sich infolge Belagverschleiß ändernde Lüftspiel im wesentlichen konstant hält,
*dadurch gekennzeichnet,*
daß der Belagverschleißdetektor aus einem Untersetzungsgetriebe *(53)* und einem von dessen Abtrieb betätigten Drehwinkelsensor *(54)* gebildet ist, wobei das Untersetzungsgetriebe *(53)* antriebsseitig mit der Nachstelleinrichtung *(74)* gekoppelt ist und die von dieser während des gesamten Nachstellzyklus' insgesamt durchgeführten Umdrehungen auf höchstens eine Umdrehung seines Abtriebs reduziert.

2. Belagverschleißdetektor nach Anspruch 1, *dadurch gekennzeichnet,* daß das bremsscheibenabgewandte Ende der Nachstelleinrichtung *(74)* mit dem Untersetzungsgetriebe *(53)* gekoppelt ist.

3. Belagverschleißdetektor nach Anspruch 1 oder 2, *dadurch gekennzeichnet,* daß der Drehwinkelsensor ein Drehpotentiometer *(54)* aufweist, wobei der Untersetzungsfaktor des Untersetzungsgetriebes *(53)* so gewählt ist, daß die von der Nachstelleinrichtung *(74)* während des gesamten Nachstellzyklus' insgesamt durchgeführten Umdrehungen auf einen Drehwinkel reduziert sind, der im wesentlichen dem vollständigen Betätigungswinkel des Drehpotentiometers *(54)* entspricht.

4. Belagverschleißdetektor nach Anspruch 3, *dadurch gekennzeichnet,* daß der Abtrieb des Untersetzungsgetriebes (53) mit einem Schleifer *(542)* des Drehpotentiometers *(54)* gekoppelt ist.

5. Belagverschleißdetektor nach Anspruch 1 oder 2, *dadurch gekennzeichnet,* daß der Drehwinkelsensor *(54)* einen optischen oder magnetischen Drehwinkelgeber aufweist, wobei der Untersetzungsfaktor des Untersetzungsgetriebes *(53)* so gewählt ist, daß die von der Nachstelleinrichtung *(74)* während des gesamten Nachstellzyklus' insgesamt durchgeführten Umdrehungen auf etwas weniger als eine 360-Grad-Umdrehung reduziert sind.

6. Belagverschleißdetektor nach Anspruch 5, *dadurch gekennzeichnet,* daß der Abtrieb des Untersetzungsgetriebes *(53)* eine optische Codierscheibe bzw. eine mit Magneten versehene Umfangsfläche dreht, die auf mindestens ein ortsfestes Sensorelement einwirkt.

7. Belagverschleißdetektor nach einem der Ansprüche 1 bis 6, insbesondere nach dem Oberbegriff des Anspruchs 1, *dadurch gekennzeichnet,* daß das Untersetzungsgetriebe *(53)* in einer Lagerungsvorrichtung *(52)* gelagert ist, die das Untersetzungsgetriebe *(53)* drehfest, jedoch unter Aufrechterhaltung einer Längs- und Querverschiebbarkeit trägt.

8. Belagverschleißdetektor nach Anspruch 7, *dadurch gekennzeichnet,* daß die Lagerungsvorrichtung *(52)* aus einem längsverschiebbar gelagerten Längsschlitten *(521)* gebildet ist, in dessen Mitte ein Querschlitten *(522)* querverschiebbar gelagert ist, der das Untersetzungsgetriebe *(53)* trägt.

9. Belagverschleißdetektor nach Anspruch 7 oder 8, *dadurch gekennzeichnet,* daß die Lagerungsvorrichtung *(52)* an der Innenwandung einer Gehäuseabdeckung *(50)* befestigt ist.

10. Belagverschleißdetektor nach einem der Ansprüche 1 bis 9, insbesondere 7 bis 9, *dadurch gekennzeichnet,* daß der Drehwinkelsensor *(54)* und das Untersetzungsgetriebe *(53)* als eine integrale Baueinheit ausgebildet sind.

11. Belagverschleißdetektor nach einem der Ansprüche 1 bis 10, *dadurch gekennzeichnet,* daß das Untersetzungsgetriebe *(53)* ein Zykloidengetriebe ist.

12. Druckluftbetätigte Scheibenbremse nach dem Oberbegriff des Anspruchs 1, *gekennzeichnet durch* einen Belagverschleißdetektor nach einem der Ansprüche 1 bis 11.

## Claims

1. Lining-wear detector for a compressed-air-operated disc brake, which has a calliper (2) embracing a brake disc (1), on the one side of which calliper is arranged a brake application device (3), which, by way of at least one adjusting spindle (72, 73) and a pressure piece (70, 71) which is disposed on the brake-disc-side end of said adjusting spindle, acts on a brake block (10), which is mounted in the calliper (2) on the brake application side in a manner such that it can be shifted relative to the brake disc (1), with an adjusting device (74), which is coupled in a rotationally secure manner with the adjusting spindle (72, 73), keeping the air play, which alters as a result of lining wear, substantially constant, characterised in that the lining-wear detector is formed from a step-down gear (53) and an angle-of-rotation sensor (54) which is operated by the output drive of said step-down gear, with the step-down gear (53) being coupled on the drive side to the adjusting device (74) and reducing the rotations carried out in all by the latter during the whole adjusting cycle to at most one rotation of its output drive.

2. Lining-wear detector according to claim 1, characterised in that the end of the adjusting device (74) that faces away from the brake disc is coupled to the step-down gear (53).

3. Lining-wear detector according to claim 1 or 2, characterised in that the angle of rotation sensor has a rotary potentiometer (54), with the step-down factor of the step-down gear (53) being chosen in such a way that the rotations carried out in all by the adjusting device (74) during the whole adjusting cycle are reduced to an angle of rotation which substantially corresponds to the complete angle of operation of the rotary potentiometer (54).

4. Lining-wear detector according to claim 3, characterised in that the output drive of the step-down gear (53) is coupled to a slider (542) of the rotary potentiometer (54).

5. Lining-wear detector according to claim 1 or 2, characterised in that the angle of rotation sensor (54) has an optical or magnetic angle of rotation transmitter, with the step-down factor of the step-down gear (53) being chosen in such a way that the rotations carried out in all by the adjusting device (74) during the whole adjusting cycle are reduced to somewhat less than one 360-degree rotation.

6. Lining-wear detector according to claim 5, characterised in that the output drive of the step-down gear (53) rotates an optical code disc or a circumferential surface which is provided with magnets, which optical code disc or circumferential surface acts on at least one fixed sensor element.

7. Lining-wear detector according to one of claims 1 to 6, in particular according to the preamble of claim 1, characterised in that the step-down gear (53) is mounted in a bearing device (52), which supports the step-down gear (53) in a manner such that it is rotationally secure but can still be longitudinally and transversely shifted.

8. Lining-wear detector according to claim 7, characterised in that the bearing device (52) is formed from a longitudinal slide (521), which is mounted in such a way that it can be longitudinally shifted, in the middle of which is mounted, in a manner such that it can be transversely shifted, a cross slide (522) which supports the step-down gear (53).

9. Lining-wear detector according to claim 7 or 8, characterised in that the bearing device (52) is secured to the inside wall of a housing cover (50).

10. Lining-wear detector according to one of claims 1 to 9, in particular 7 to 9, characterised in that the angle of rotation sensor (54) and the step-down gear (53) are constructed as an integral constructional unit.

11. Lining-wear detector according to one of claims 1 to 10, characterised in that the step-down gear (53) is a cycloidal gear.

12. Compressed-air-operated disc brake according to the preamble of claim 1, characterised by a lining-wear detector according to one of claims 1 to 11.

## Revendications

1. Détecteur d'usure de garniture pour un frein à disque actionné par air comprimé, qui possède un étrier de frein (2) entourant un disque de frein (1) et sur un côté duquel est disposé un dispositif de serrage (3), qui agit, par l'intermédiaire d'au moins une broche de réglage (72,73) et d'un élément de pression (70,71), qui prend appui, à l'extrémité tournée vers le disque de frein, sur une mâchoire de frein (10) montée, côté serrage, coulissante par rapport au disque de frein (1) dans l'étrier de frein (2), un dispositif de rattrapage de jeu (74), solidaire en rotation de la broche de réglage (72, 73), maintenant essentiellement constant le jeu au repos, qui varie en raison de l'usure de la garniture,
caractérisé par le fait
que le détecteur d'usure de garniture est formé d'un démultiplicateur (53) et d'un capteur d'angle de rotation (54), actionné par le côté mené de ce démultiplicateur, le démultiplicateur (53) étant couplé, du côté entraînement, au dispositif de rattrapage de jeu (74) et réduisant le nombre de rotations, exécutées au total pendant l'ensemble du cycle de rattrapage de jeu, à au maximum une rotation de son côté mené.

2. Détecteur d'usure de garniture suivant la revendication 1, caractérisé par le fait que l'extrémité, tournée à l'opposé du disque de frein, du dispositif de rattrapage de jeu (74) est couplée au démultiplicateur (53).

3. Détecteur d'usure de garniture suivant la revendication 1 ou 2, caractérisé par le fait que le capteur d'angle de rotation comporte un potentiomètre rotatif (54), le facteur de démultiplication du démultiplicateur (53) étant choisi de telle sorte que les rotations, exécutées au total par le dispositif de rattrapage de jeu (74) pendant l'ensemble du cycle de rattrapage de jeu, sont réduites à un angle de rotation, qui correspond essentiellement à l'angle total d'actionnement du potentiomètre rotatif (54).

4. Détecteur d'usure de garniture suivant la revendication 3, caractérisé en ce que le côté mené du démultiplicateur (53) est couplé à un curseur (542) du potentiomètre rotatif (54).

5. Détecteur d'usure de garniture suivant la revendication 1 ou 2, caractérisé par le fait que le capteur d'angle de rotation (54) possède un générateur optique ou magnétique d'angle de rotation, le facteur de démultiplication du démultiplicateur (53) étant choisi de telle sorte que les rotations, exécutées globalement par le dispositif de rattrapage de jeu (74) pendant l'ensemble du cycle de rattrapage de jeu, sont réduites par exemple à moins d'une rotation de 360 degrés.

6. Détecteur d'usure de garniture suivant la revendication 5, caractérisé par le fait que le côté mené du démultiplicateur (53) fait tourner un disque optique de codage ou une surface circonférentielle équipée d'aimants, qui agit sur au moins un élément fixe de détection.

7. Détecteur d'usure de garniture suivant l'une des revendications 1 à 6, notamment suivant le préambule de la revendication 1, caractérisé par le fait que le démultiplicateur (53) est monté dans un dispositif de support (52), qui porte le démultiplicateur (53) avec blocage en rotation, tout en maintenant une possibilité de déplacement longitudinal et transversal.

8. Détecteur d'usure de garniture suivant la revendication 7, caractérisé par le fait que le dispositif de support (52) est formé par un curseur longitudinal (521) monté de manière à être déplaçable longitudinalement et au centre duquel est monté, de manière à être déplaçable transversalement, un chariot transversal (522), qui porte le démultiplicateur (53).

9. Détecteur d'usure de garniture suivant la revendication 7 ou 8, caractérisé par le fait que le dispositif de support (52) est fixé à la paroi intérieure d'un capotage de boîtier (50).

10. Détecteur d'usure de garniture suivant l'une des revendications 1 à 9, notamment 7 à 9, caractérisé par le fait que le capteur d'angle de rotation (54) et le démultiplicateur (53) sont agencés sous la forme d'une unité de construction monobloc.

11. Détecteur d'usure de garniture suivant l'une des revendications 1 à 10, caractérisé par le fait que le démultiplicateur (53) est un engrenage cycloïdal.

12. Frein à disque actionné par air comprimé suivant le préambule de la revendication 1, caractérisé par un détecteur d'usure de garniture suivant l'une des revendications 1 à 11.
